# EUROPÄISCHE PATENTSCHRIFT

(11) **EP 0 792 926 B1**
(45) Veröffentlichungstag und Bekanntmachung des Hinweises auf die Patenterteilung: **25.06.2003**
(21) Anmeldenummer: 97102724.8
(22) Anmeldetag: 20.02.1997
(51) Int. Cl.: C09J 157/00

(54) **Wässriger Dispersionsklebstoff**
Aqueous dispersion adhesive
Adhésif aqueuse de dispersion

(30) Priorität: 28.02.1996 DE 19607387
(43) Veröffentlichungstag der Anmeldung: 03.09.1997
(73) Patentinhaber: Henkel Kommanditgesellschaft auf Aktien, 40589 Düsseldorf-Holthausen (DE)
(72) Erfinder: Zschäbitz, Kirsten, 40597 Düsseldorf (DE); Tamcke, Thomas, 40593 Düsseldorf (DE); Urbath, Hartmut, 42389 Wuppertal (DE); Wenzel, Udo, 42489 Wülfrath (DE); Windhövel, Udo Frank Dr., 40789 Monheim (DE)

(56) Entgegenhaltungen:
- EP-A- 0 257 984
- EP-A- 0 534 393
- WO-A-92/13924
- DATABASE WPI Week 8424 Derwent Publications Ltd., London, GB; AN 84-148920 XP002120540 & JP 59 076972 A (SUMITOMO NAUGATUCK), 2. Mai 1984 (1984-05-02)
- PATENT ABSTRACTS OF JAPAN vol. 006, no. 044 (C-095), 19. März 1982 (1982-03-19) & JP 56 161483 A (KANEBO N S C KK), 11. Dezember 1981 (1981-12-11)
- PATENT ABSTRACTS OF JAPAN vol. 008, no. 162 (C-235), 26. Juli 1984 (1984-07-26) & JP 59 064682 A (SUMITOMO NAUGATUCK KK), 12. April 1984 (1984-04-12)
- PATENT ABSTRACTS OF JAPAN vol. 008, no. 193 (C-241), 5. September 1984 (1984-09-05) & JP 59 084961 A (ASAHI GLASS KK), 16. Mai 1984 (1984-05-16)
- PATENT ABSTRACTS OF JAPAN vol. 018, no. 347 (C-1219), 30. Juni 1994 (1994-06-30) & JP 06 088074 A (HITACHI CHEM CO LTD), 29. März 1994 (1994-03-29)
- PATENT ABSTRACTS OF JAPAN vol. 014, no. 539 (C-0782), 28. November 1990 (1990-11-28) & JP 02 225582 A (SHOEI KAGAKU KOGYO KK), 7. September 1990 (1990-09-07)
- PATENT ABSTRACTS OF JAPAN vol. 1995, no. 08, 29. September 1995 (1995-09-29) & JP 07 138532 A (MITSUBISHI CHEM BASF CO LTD;OTHERS: 01), 30. Mai 1995 (1995-05-30)

## Beschreibung

Die Erfindung betrifft einen wäßrigen Dispersionsklebstoff auf der Basis von 20 - 99 Gew.-% eines Polymeren mit einer Glastemperatur unter -25 °C und 1 - 80 Gew.-% eines Füllstoffs, wobei sich die Gewichtsprozente auf die Summe der Bestandteile des wäßrigen Dispersionsklebstoffs mit Ausnahme von Wasser beziehen. Außerdem betrifft die Erfindung die Herstellung und Verwendung des Dispersionsklebstoffes.

Ein derartiger wäßriger Dispersionsklebstoff wird in der DE 44 04 411 A1 beschrieben. Bei dem Polymer handelt es sich vorzugsweise um radikalisch polymerisierte Polymere aus ethylenisch ungesättigten Monomeren, insbesondere aus C₁-C₂₀-Alkyl(meth)acrylaten. Als Füllstoffe werden Kreide und Quarzmehl mit einem Teilchendurchmesser von 2 bis 50 µm genannt. Die Vorteile des Dispersionsklebstoffes bestehen darin, daß er im wesentlichen frei von organischen Lösemitteln, Weichmachern und zusätzlichen klebrigmachenden Harzen ist. Bei derartigen emissionsarmen Klebstoffen ist die zusetzbare Menge an Füllstoffen besonders kritisch, wenn man eine ausreichende Klebkraft und gleichzeitig einen geringen Schwund realisieren möchte.

Damit eine ausreichende Klebkraft erzielt wird, muß der Gehalt an Dispersion gegenüber herkömmlichen Klebstoffen erhöht und der Füllgrad an anorganischen Füllstoffen gesenkt werden. Übliche Dispersionen enthalten zwischen 30 - 50% Wasser, somit erhöht sich zwangsläufig der Wassergehalt des Klebstoffs. Bei der Trocknung ist der Volumenschwund, der im wesentlichen dem Gehalt an flüchtigen Bestandteilen proportional ist, folglich größer. Die füllenden Eigenschaften des Klebstoffes, die insbesondere bei der Klebung von grob strukturierten Materialien (z. B.Teppich) auf rauhen Substraten (z. B. Zement-Estrich) wichtig sind, erfüllen nicht mehr die Anforderungen. Die Festigkeit und Haltbarkeit der Klebung sind nicht mehr zufriedenstellend.

Ausgehend von diesem Stand der Technik sollte ein wäßriger Dispersionsklebstoff entwickelt werden, der neben Emissionsarmut vor allem einen geringen Schwund bei ausreichender Klebkraft hat und auch sonst gute Gebrauchseigenschaften sowie eine leichte Verarbeitung gewährleistet.

Die erfindungsgemäße Lösung ist den Ansprüchen zu entnehmen. Sie beruht im wesentlichen darin, daß der Füllstoff teilweise ein Leichtfüllstoff ist. Der erfindungsgemäße wäßrige Dispersionsklebstoff auf der Basis von 20 bis 99 Gew.-% eines Polymeren mit einer Glasübergangstemperatur unter -25 °C und 1 bis 80 Gew.-% eines Füllstoffes ist also dadurch gekennzeichnet, daß der Füllstoff teilweise ein Leichtfüllstoff ist, wobei der Anteil an Leichtfüllstoft 1-20 Gew.-%, bezogen auf den schweren Füllstoff, ausmacht.

Unter "Leichtfüllstoff" wird ein Füllstoff mit einem spezifischen Gewicht von weniger als 1 g/cm³ verstanden, insbesondere mit einem von weniger als 0,5 g/cm³. In der Regel handelt es sich um poröse Teilchen mit einem Durchmesser von 2 bis zu 500 µm, insbesondere von 5 bis 200 µm. Zweckmäßigerweise sind die Teilchen rund und glatt. Sie können aus anorganischem Material sein, z. B. aus Aluminiumsilikat, vorzugsweise sind sie jedoch aus organischen Polymeren, z. B. aus Homo- und Coplymeren von Styrol, Acrylnitril und Vinylidenchlorid. Konkrete Leichtfüllstoffe sind im Handel erhältlich unter den Namen: Fillite, Expancel, Scotchlite, Dualite, Sphericel, Zeeospheres, Armospheres, Cenospheres, Polyfill, Mikrosil, Pangel, Pansil, Q-Cel.

Ihr Gewichtsanteil an dem Füllstoff insgesamt hängt stark von dem spezifischen Gewicht des üblichen Füllstoffes mit einem spezifischen Gewicht von mehr als 1 g/cm³ (schwerer Füllstoff) und dem spezifischen Gewicht des Leichtfüllstoffes ab. Er sollte im Bereich von 100 zu 1 bis 100 zu 20 liegen. Das Volumenverhältnis beider Füllstoffe sollte im Bereich von 1 zu 100 bis 100 zu 100 liegen, vorzugsweise im Bereich von 3 zu 100 bis 70 zu 100.

Bei den schweren Füllstoffen handelt es sich um Carbonate (insbesondere Calciumcarbonat, Silikate (insbesondere um Talk, Ton, Glimmer), Sulfate (insbesondere von Barium und Calcium), Oxide und Hydroxide (insbesondere von Silicium und Aluminium) und um Ruß. Bevorzugt wird Kreide eingesetzt. Wie üblich haben diese Füllstoffe einen mittleren Teilchendurchmesser von 1 bis 50, insbesondere von 2 bis 5 µm. Der Teilchendurchmesser wird üblicherweise durch Siebanalyse mit Prüfsieben gemäß DIN 4188 bestimmt.

Der Gewichtsanteil beider Füllstoffe zusammen in dem wäßrigen Dispersionsklebstoff beträgt 1 bis 80 insbesondere 10 bis 50 Gew.-%, bzw. 5 bis 95, insbesondere 40 bis 75 Vol.-%.

Bei dem Polymeren handelt es sich vorzugsweise um ein radikalisch polymerisiertes Polymerisat aus ethylenisch ungesättigten Monomeren mit 1 oder 2 C, C-Doppelbindungen, insbesondere um Vinylmonomere. Die folgenden Monomeren können z. B. zu 60 bis 100 Gew.-%, vorzugsweise 80 bis 100 Gew.-%, besonders bevorzugt 90 bis 99,8 Gew.-%, bezogen auf das Polymer, im Polymer enthalten sein:
Das Polymer kann z. B. aus C₁-C₂₀-Alkyl(meth)acrylaten, Vinylestern von bis zu 20 C-Atomen enthaltenden Carbonsäuren, Vinylaromaten mit bis zu 20 C-Atomen, ethylenisch ungesättigten Nitrilen, Vinylhalogeniden, nicht aromatischen Kohlenwassersoffen mit mindestens 2 konjugierten Doppelbindungen oder Mischungen dieser Monomeren augebaut sein.
Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Besonders bevorzugt sind (Meth)acrylsäureester und deren Mischungen.
Vinylester von Carbonsäuren mit 1 bis 20 C-Atomen sind z. B. Vinyllaurat,-stearat. Vinylpropionat, Versaticsäurevinylester und Vinylacetat.
Als vinylaromatische Verbindungen kommen Vinyltoluol, Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.
Die Vinylhalogenide sind mit Chlor, Fluor oder Brom substituierte ethylenisch ungesättigte Verbindungen, bevorzugt Vinylchlorid und Vinylidenchlorid.
Als nicht aromatische Kohlenwasserstoffe mit 2 bis 8 C-Atomen und mindestens zwei olefinischen Doppelbindungen seien Butadien, Isopren und Chloropren genannt.

Weitere Monomere, die z. B. von 0 bis 40 Gew.-%, vorzugsweise von 0 bis 20 Gew.-% und besonders bevorzugt von 0,2 bis 10 Gew.-% im Polymer enthalten sein können, sind insbesondere C₁-C₁₀-Hydroxyalky(meth)acrylate,(Meth)acrylamid sowie dessen am Stickstoff mit C₁-C₄-Alkyl-substituierten Derivate, ethylenisch ungesättigte Carbonsäuren, Dicarbonsäuren, deren Halbester und Anhydride, z. B. (Meth)acrylsäure, Maleinsäure, Fumarsäure, Maleinsäureanhydrid, Maleinsäure- und Fumarsäurehalbester und Itaconsäure. Ganz besonders bevorzugt ist ein Gehalt von 0,2 bis 5 Gew.-% einer ethylenisch ungesättigten Carbonsäure.

Die Glasübergangstemperatur des Polymeren liegt unter -25 °C, insbesondere zwischen -25 °C und -60 °C, besonders bevorzugt zwischen -30 °C und -50 °C.
Die Glasübergangstemperatur des Polymeren läßt sich nach üblichen Methoden wie Differentialthermoanalyse oder Differential Scanning Calorimetrie (s.z.B. ASTM 3418/82, sog. "midpoint temperature") bestimmen.
Das zahlenmittlere Molekulargewicht Mn des Polymeren ist vorzugsweise größer als 10 000, bevorzugt größer als 20 000, besonders bevorzugt größer als 30 000 und das gewichtsmittlere Molekulargewicht M_{W} ist vorzugsweise größer 250 000 (bestimmt durch Gelpermeationschromatographie mit Polystyrol als Standard an einer Polymerlösung in Tetrahydrofuran nach Sedimentation der unlöslichen Bestandteile).

Die Herstellung des Polymeren erfolgt durch radikalische Polymerisation. Geeignete Polymerisationsmethoden, wie Substanz-, Lösungs-, Suspensions- oder Emulsionspolymerisation sind dem Fachmann bekannt. Die Polymerisation können durch nachträgliche polymeranaloge Reaktionen modifiziert werden, z. B. durch teilweise Umesterung oder Hydrolyse.
Vorzugsweise wird das Copolymerisat durch Lösungspolymerisation mit anschließender Dispergierung in Wasser oder besonders bevorzugt durch Emulsionspolymerisation hergestellt, so daß wäßrige Copolymerdispersionen entstehen.
Die Emulsionspolymerisation kann diskontinuierlich, mit oder ohne Verwendung von Saatlatices, unter Vorlage aller oder einzelner Bestandteile des Reaktionsgemisches, oder bevorzugt unter teilweise Vorlage und Nachdosierung der oder einzelner Bestandteile des Reaktonsgemisches, oder nach dem Dosierverfahren ohne Vorlage durchgeführt werden.
Die Monomeren können bei der Emulsionspolymerisation wie üblich in Gegenwart eines wasserlöslichen Initiators und eines Emulgators bei vorzugsweise 30 bis 95 °C polymerisiert werden.
Geeignete Initiatoren sind z. B. Natrium-, Kalium- und Ammoniumpersulfat, tert.-Butylhydroperoxide, wasserlösliche Azoverbindungen oder auch Redoxinitiatoren wie H₂O₂/Ascorbinsäure.
Als Emulgatoren dienen z. B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.
Im Falle von wäßrigen Sekundärdispersionen wird das Copolymerisat zunächst durch Lösungspolymerisation in einem organischen Lösungsmittel hergestellt und anschließend unter Zugabe von Salzbildnern, z. B. von Ammoniak zu Carbonsäuregruppen enthaltenden Copolymerisanten, in Wasser ohne Verwendung eines Emulgators oder Dispergierhilfsmittels dispergiert. Das organische Lösungsmittel kann abdestilliert werden Die Herstellung von wäßrigen Sekundärdispersionen ist dem Fachmenn bekannt und z. B. in der DE-A 37 20 860 beschrieben.

Zur Einstellung des Molekulargewichts können bei der Polymerisation Regler eingesetzt werden. Geeignet sind z. B. -SH enthaltende Verbindungen wie Mercaptoethanol, Mercaptopropanol, Thiophenol. Thioglycerin, Thioglykolsäureethylester, Thioglykolsäuremethylester und tert.-Dodecylmercaptan.
Der Feststoffgehalt der erhaltenen Polymerdispersionen beträgt vorzugsweise 40 bis 80, besonders bevorzugt 45 bis 75 Gew.-%. Hohe Polymerfeststoffgehalte können z. B. nach Verfahren, welche in der deutschen Patentanmeldung P 43 01 683.1 oder der EP 37 923 beschrieben sind, eingestellt werden.

Der Dispersionsklebstoff kann weiterhin Netz- oder Dispergiermittel z. B. für die Füllstoffe, Verdicker und auch z. B. noch weitere übliche Zuschlagstoffe, wie Entschäumer und Konservierungsstoffe enthalten. Netz- oder Dispergiermittel können z. B. in Mengen von 0 bis 5 Gew.-%, Verdicker in Mengen von 0 bis 10 Gew.-%, Konservierungsmittel in Mengen von 0 bis 1 Gew.-% und Entschäumer in Mengen von 0 bis 5 Gew.-% in der wäßrigen Zusammensetzung enthalten sein. Die Gewichtsangaben beziehen sich dabei auf die Summe aller Bestandteile der wäßrigen Zusammensetzung, mit Ausnahme von Wasser.
Die Zusammensetzung ist im wesentlichen frei von organischen Lösungsmitteln und Weichmachern wie z.B. Butylacetat, Toluol oder Phthalsäureester. Sie enthält daher im wesentlichen keine organischen Verbindungen mit einem Siedepunkt unterhalb 260 °C bei Normaldruck (1 bar) vorzugsweise weniger als 0,5 Gew.-%. Die Zusammensetzung ist auch frei von üblicherweise zusätzlich eingesetzten klebrigmachenden Harzen, wie Kolophoniumharzen.

Die Herstellung der wäßrigen Zusammensetzung kann in einfacher Weise dadurch erfolgen, daß der bei der Emulsionspolymerisation erhaltenen wäßrigen Polymerdispersion die Füllstoffe und gegebenenfalls weitere Additive unter Rühren zugesetzt werden.

Der Wassergehalt des fertigen Klebstoffes liegt im allgemeinen bei 7 bis 50, insbesondere 10 bis 30 Gew.-%, bezogen auf die gesamte wäßrige Zubereitung.

Es wurde überraschend gefunden, daß der Einsatz von Leichtfüllstoffen in Kombination mit üblichen Füllstoffen zu wäßrigen Dispersions-Klebstoffen führt, die im wesentlichen frei von organischen Lösemitteln, Weichmachern und klebrigmachenden festen oder flüssigen Harzen sind (siehe z.B. DE 44 04 411) und
1. deren Schwindung vergleichsweise, d.h. bezogen auf die flüchtigen Anteile, gering ist,
2. deren Festigkeit auch nach Alterung noch die jeweiligen Mindestanforderungen erfüllt und
3. die exzellente Verarbeitungseigenschaften haben.

Als besonders effektiv haben sich solche Leichtfüllstoffe gezeigt, die eine enge Teilchengrößenverteilung und ein spezifisches Gewicht von weniger als 100 kg/m³ haben.

Die wäßrige Dispersion eignet sich daher insbesondere als füllender Klebstoff zum Verkleben von Substraten aus Kunststoff, Holz. Metall, Textilien aus gewebten und/oder ungewebten Fasern.
Ganz besonders eignet sich der wäßrige Dispersionsklebstoff als Fußbodenkleber für Bodenbeläge z.B. aus PVC, in Ausführungen als Mehrschichtbeläge oder Homogenbeläge, Schaumstoffbeläge mit Textilunterseite, z.B. Jute, Polyestervlies, Gummibeläge, Textilbeläge mit unterschiedlicher Rückenausstattung, wie Polyurethanschaum, Styrol-Butadien-Schaum, textiler Zweitrücken, Nadelfilzbodenbeläge, Polyolefinbeläge oder Linoleumbeläge, auf Untergeründen wie Holz, Estrich, Beton, keramische Fliesen, Metalluntergründe oder ähnliches. Unebenheiten des Untergrundes werden wie beim Verspachteln mit einer Schicht des erfindungsmäßigen Klebstoffes ausgeglichen.
Der Kleber kann z. B. mit einer Zahnleiste auf den Untergrund aufgetragen werden. Nach dem üblichen Ablüften wird der Bodenbelag eingelegt und angerieben. Arbeitstechnisch ist der erfindungsgemäße Kleber den lösungsmittelhaltigen Kunstharzklebern und den lösungsmittelfreien oder -armen Dispersionseinseitklebern gleichzusetzen. Die erfindungsgemäße Klebstoffzusammensetzung weist ein gutes Niveau von anwendungstechnischen Eigenschaften wie Schälfestigkeit, Scherfestigkeit, Naßanzugsvermögen und Trockenanfaßvermögen und eine hohe Wärmestandfestigkeit auf.
Die Erfindung wird nun im einzelnen erläutert:

### Beispiele

I. Ausgangsstoffe:
   1. Acronal DS 3468, ein ca. 70 %iges CO-Polyacrylat der Fa. BASF gemäß DE 44 04 411 A1, Beispiel 1,
   2. Primal CA 187, eine wäßrige ca. 61 %ige Co-Polyacrylat-Dispersion der Fa. Rohm & Haas auf der Basis von Butylacrylat/Methacrylat,
   3. Expancel 551 WE, ein Leichtfüllstoff der Fa. AKZO-Nobel auf der Basis von Polyvinylidenchlorid-Copolymer mit einem mittleren Durchmesser von 50 µm,
   4. Hydropalat 1706, ein Dispergiermittel der Fa. Henkel auf der Basis von Natrium - Polyacrylat,
   5. Disponil SUS IC 875, ein Emulgator der Fa. Henkel auf der Basis von Di-2-ethylhexylsulfosuccinat,
   6. Acrylsol TT615, ein Verdicker der Fa. Rohm & Haas auf der Basis von Polyacrylsäure,
   7. Latekoll D, 2 %-ig, ein Verdicker der Fa. BASF auf der Basis von Polyacrylsäure
II. Klebstoff-Herstellung:
   Aus den obigen Ausgangsstoffen in den in der Tabelle angegebenen Gewichtsteilen wurde auf folgende Weise der Klebstoff hergestellt:
      In die Polymerdispersion werden Dispergierhilfsmittel, Emulgator, Entschäumer und Konservierungsmittel eingerührt. Sodann werden der leichte und schwere Füllstoff zugegeben und glatt gerührt. Abschließend wird der Klebstoff durch Zugabe des Verdickers auf die für die Verarbeitung notwendige Viskosität eingestellt.
III. Eigenschaften der Klebstoffe:
   1. Prüfmethoden:
      - Spezifisches Gewicht:
         Das spezifische Gewicht des Klebstoffes wird mit einem Metallpyknometer vom Typ 290/l nach DIN 53217 bei 20°C bestimmt.
      - Klebstoffauftragsmenge:
         Der Klebstoff wird mit einer gezahnten Spachtel auf eine Glasplatte (35 X 35 cm) aufgetragen und die Masse auf einer Laborwaage bestimmt. Der Wert wird auf die Fläche von 1 m² hochgerechnet.
      - Tack/Naßklebkraft:
         Der Klebstoff wird mit einem gezahnten Spachtel auf eine mit zementärer Ausgleichmasse beschichtete Spanplatte aufgetragen. Nach unterschiedlicher Ablüftezeit werden 5 cm breite Streifen eines Textilbelags mit textiler Rückenausstattung in das Klebstoffbett eingelegt und angerieben. Anschließend werden die Streifen direkt wieder abgezogen und der Schälwiderstand in N/5cm bestimmt.
      - Endklebkraft:
         Die Endklebkraft wird als Schälwiderstand gemäß DIN 53269 in N/mm gemessen.
      - Geruchsprüfung:
         a) Es werden ca. 50 g des Klebstoffes in ein 250 ml-Schraubdeckelglas gefüllt und 3 Tage bei 23 °C geschlossen gelagert. Sodann beurteilen mindestens 5 Probanden den Geruch dieser Klebstoffprobe an Hand folgender Skala:
            1 = geruchlos 2 = wahrnehmbar 3 = erträglich
            4 = belästigend 5 = unerträglich.
         b) Auf eine Glasplatte ( 5X10 cm) wird mit einem Rakel ( 200 um Spaltweite) ein Klebstoffilm aufgetragen und 24 h bei 23 °C/50 % rcl. Feuchte getrocknet. Sodann wird diese Glasplatte in ein 500 ml Schraubdeckelglas übergeführt und 3 Tage bei 23 °C geschlossen gelagert. Diese Beurteilung erfolgt wie unter Punkt a) beschrieben.
      - Verstreichbarkeit:
         Auf verschiedenen Untergründen werden die Klebstoffe praxisgerecht aufgetragen und von mehreren Prüfern der Kraftaufwand gemäß folgender Skala beurteilt:
         1 = sehr gering 2 = gering 3 = akzeptabel 4 = hoch
         5 = nicht zumutbar.
      - Schwund/Masseverlust:

      Der Schwund wurde gemäß DIN 52451 bestimmt, wobei eine definierte Menge Klebstoff auf eine Trägerplatte aus Aluminium aufgetragen und der Auftrieb in Iso-Octan ermittelt wurde. Dann wurden die Proben 7 Tage bei 70°C getrocknet und erneut gewogen und der Auftrieb bestimmt. In Tabelle 2 bedeuten
      Masse 1: Trägerplatte in Luft
      Masse 2: Trägerplatte in iso-Octan
      Masse 3: Träger mit Klebstoff in Luft
      Masse 4: Träger mit Klebstoff in iso-Octan
      Masse 5: Träger mit Klebstoff in Luft nach Trocknung
      Masse 6: Träger mit Klebstoff in iso-Octan nach Trocknung

      Aus diesen Daten ergibt sich der Masseverlust und über den Auftrieb auch der Schwund nach Trocknung des Klebstoffs.
   2. Die Prüfergebnisse sind der Tabelle 1 zu entnehmen.

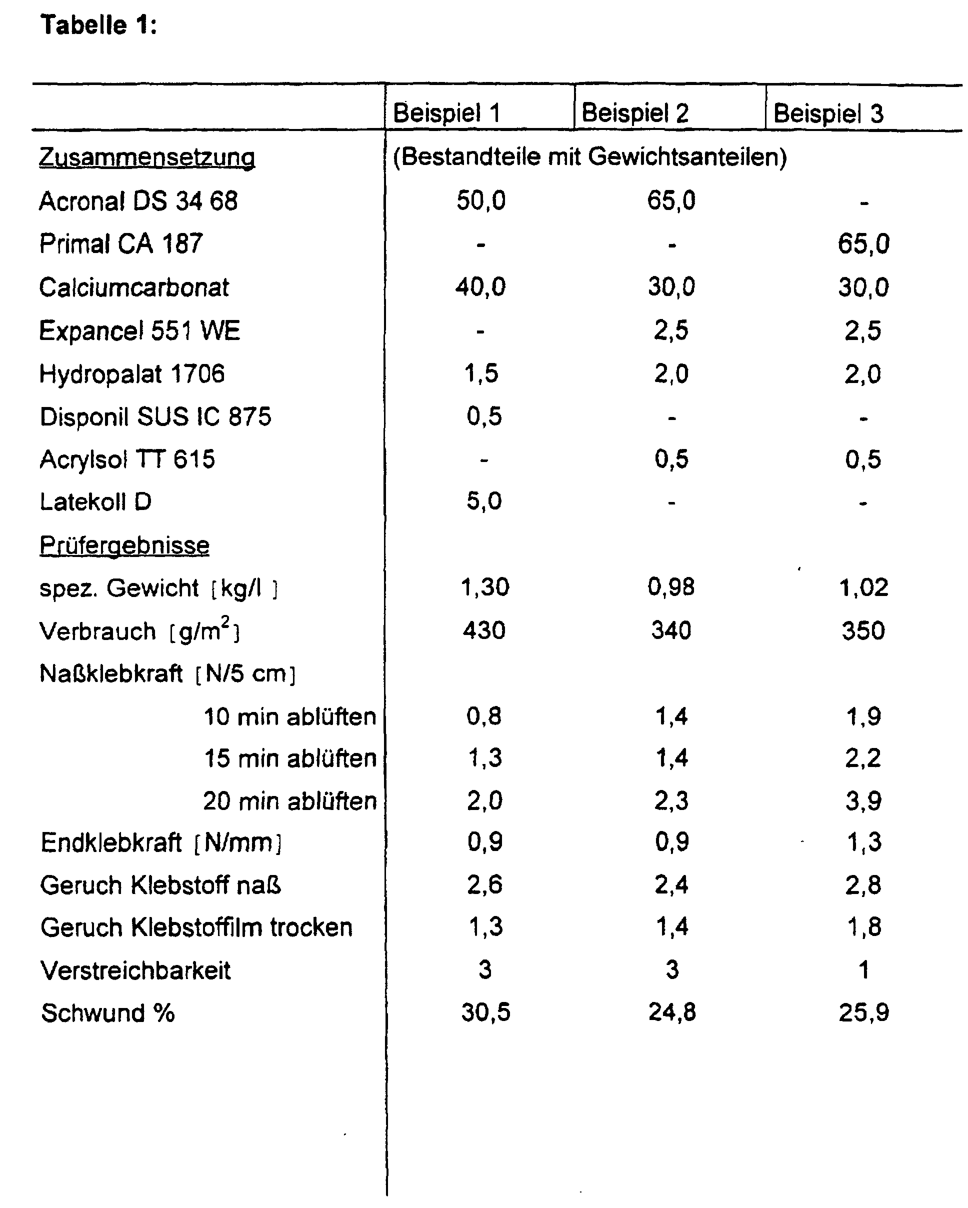

### Beispiele 4 - 7

Die Klebstoffe der Beispiele 4 bis 7 wurden aus folgenden Ausgangsstoffen in der in der Tabelle angegebenen Menge wie bei den Beispielen 1 hergestellt:

| | Beispiel 4 | Beispiel 5 | Beispiel 6 | Beispiel 7 |
|---|---|---|---|---|
| Primal CA-187 | 50,0 | 65,0 | 65,0 | |
| Acronal A 323 | | | | 28,0 |
| Calciumcarbonat | 40,0 | 30,0 | 32,5 | 50,0 |
| Expancel 551 WE | | 2,5 | | |
| Hydropalat 1706 | 1,0 | 2,0 | 2,0 | 1,0 |
| Disponil SUS IC 875 | 0,5 | | | |
| Acrysol TT 615 | | 0,5 | 0,5 | |
| Latekoll D | 5,0 | | | 3,0 |
| Harzschmelze* | | | | 18,0 |

| | | | | |
|---|---|---|---|---|
| * bestehend aus 80 % modifiziertem Naturharz und 20 % Plastilit 3431 | | | | |

**Tabelle 2**

| **Volumenschwundbestimmung nach DIN 52451** | | | | |
|---|---|---|---|---|
| Produktbezeichnung | Beispiel 4 | Beispiel 5 | Beispiel 6 | Beispiel 7 |
| Masse 1 | 6,9376 | 7,0934 | 7,1706 | 7,4290 |
| Masse 2 | 5,2613 | 5,3737 | 5,3818 | 5,6383 |
| Masse 3 | 8,6764 | 8,4086 | 8,4645 | 8,9703 |
| Masse 4 | 6,1186 | 5,8519 | 6,0206 | 6,4900 |
| Masse 5 | 8,2316 | 8,0559 | 8,1211 | 8,6523 |
| Masse 6 | 5,9648 | 5,7166 | 5,9004 | 6,3845 |
| *Volumen 1* | 1,26 | 1,20 | 0,94 | 0,99 |
| *Volumen 2* | 0,84 | 0,89 | 0,62 | 0,68 |
| *Einwaage* | 1,7388 | 1,3152 | 1,2939 | 1,5413 |
| *Auswaage* | 1,294 | 0,9625 | 0,95053 | 1,2233 |
| *Volumenschwund* [*%*] | -33,01 | -25,97 | -34,07 | -30,81 |
| *Massenverlust* [*%*] | -25,58 | -26,82 | -26,54 | -20,63 |
| *Dichte* [*g*/*ml*] | 1,381 | 1,100 | 1,383 | 1,565 |

Die Beispiele zeigen:
- Das spez. Gewicht nimmt mit dem Zusatz der Leichtfüllstoffe erwartungsgemäß ab, und zwar mit mehr als ca. 1,0 auf Werte, die der Binder-Dispersion entsprechen.
- Der Verbrauch in g/m² nimmt entsprechend der Dichte ab.
- Die Naßklebkraft fällt trotz der Zugabe der Mikrohohlkugeln nicht, sondern steigt an, und zwar um > 50 % nach 10 min. Ablüftung.
- Die Endklebkraft ist gleich oder um 50 % höher.
- Die Verstreichbarkeit ist gleich oder deutlich besser.
- Ein Geruch ist in allen Fällen im nassen Zustand noch wahrnehmbar, im trokkenen Zustand dagegen nicht mehr, da ja kein Lösemittel, Hochsieder, Weichmacher oder Klebrigmacher verwendet wurde.
- Verglichen mit im Handel erhältlichem Klebstoff auf der Basis von Acronal A 323, Plastilit 3431, modifiziertem Naturharz, Calciumcarbonat, Hydropalat 1706 und einem Verdicker ist der erfindungsgemäße Klebstoff deutlich leichter, geruchsärmer, schwundärmer und leichter zu verarbeiten, ohne daß die Klebkraft wesentlich herabgesetzt wird.

## Patentansprüche

1. Wäßriger füllender Dispersions-Klebstoff auf der Basis von 20 bis 99 Gew.-% eines Polymeren mit einer Glasübergangstemperatur unter -25 °C und 1 bis 80 Gew.-%, bezogen auf die Bestandteile mit Ausnahme von Wasser, eines Füllstoffes, **gekennzeichnet durch** einen Anteil mindestens eines Leichtfüllstoffes mit einem spezifischen Gewicht von weniger als 1g/cm³, wobei der Anteil an Leichtfüllstoff 1 bis 20 Gew.-% ausmacht, bezogen auf den schweren Füllstoff mit einem spezifischen Gewicht von mehr als 1g/cm³.

2. Klebstoff nach Anspruch 1, **gekennzeichnet durch** einen Leichtfüllstoff mit einem spezifischen Gewicht von weniger als 100 kg/m³.

3. Klebstoff nach Anspruch 1 oder 2, **gekennzeichnet durch** die Glasübergangstemperatur des Polymeren von -25°C bis -60°C.

4. Klebstoff nach Anspruch 1, 2 oder 3, **gekennzeichnet durch** Leichtfüllstoffe mit einem mittleren Durchmesser von 5 bis 20 µm und **durch** schwere Füllstoffe mit einem mittleren Durchmesser von 2 bis 5 µm.

5. Klebstoff nach mindestens einem der Ansprüche 1 bis 4, **gekennzeichnet durch** mindestens ein funktionelles Additiv wie Dispergierhilfsmittel, Emulgatoren, Filmbildehilfsmittel, Konservierungsmittel, Entschäumer und Verdickungsmittel.

6. Klebstoff nach mindestens einem der Ansprüche 1 bis 5, **dadurch gekennzeichnet, daß** er im wesentlichen frei von flüchtigen organischen Verbindungen und von klebrigmachenden Harzen ist.

7. Herstellung des Klebstoffes nach mindestens einem der Ansprüche 1 bis 6, **dadurch gekennzeichnet, daß** man zunächst die Dispergierhilfsmittel, den Emulgator, Entschäumer und das Konservierungsmittel sowie weitere Hilfsmittel in die Polymerdispersion einrührt, dann den leichten und schweren Füllstoff und schließlich den Verdicker.

8. Verwendung des Klebstoffes nach mindestens einem der vorangegangenen Ansprüche zum Verkleben von Fußbodenbelägen, insbesondere von textilen Belägen.

## Claims

1. A water-containing, filling dispersion adhesive based on 20 to 99% by weight of a polymer with a glass transition temperature below -25°C and 1 to 80% by weight, based on the constituents except water, of a filler, **characterized by** a content of at least one light filler with a specific gravity of less than 1 g/cm³, the percentage content of light filler being 1 to 20% by weight, based on the heavy filler with a specific gravity of more than 1 g/cm³.

2. An adhesive as claimed in claim 1, **characterized by** a light filler with a specific gravity of less than 100 kg/m³.

3. An adhesive as claimed in claim 1 or 2, **characterized by** a glass transition temperature of the polymer of -25°C to -60°°C.

4. An adhesive as claimed in claim 1, 2 or 3, **characterized by** light fillers with a mean diameter of 5 to 20 µm and by heavy fillers with a mean diameter of 2 to 5 µm.

5. An adhesive as claimed in at least one of claims 1 to 4, **characterized by** at least one functional additive, such as dispersion aids, emulsifiers, film-forming aids, preservatives, defoamers and thickeners.

6. An adhesive as claimed in at least one of claims 1 to 5, **characterized in that** it is substantially free from volatile organic compounds and tackifying resins.

7. A process for the production of the adhesive claimed in at least one of claims 1 to 6, **characterized in that** the dispersion aids, the emulsifier, defoamers and the preservative and other auxiliaries are first stirred into the polymer dispersion, followed by the light filler and the heavy filler and, finally, the thickener.

8. The use of the adhesive claimed in at least one of the preceding claims for bonding floor coverings, more particularly textile coverings.

## Revendications

1. Adhésif dispersif aqueux de remplissage à base d'un polymère possédant une température de transition vitreuse inférieure à -25 °C, à concurrence de 20 à 99 % en poids, et d'une matière de remplissage à concurrence de 1 à 80 % en poids, rapportés aux constituants à l'exception de l'eau, **caractérisé par** une fraction d'au moins une substance légère de remplissage qui possède un poids spécifique inférieur à 1 g/cm³, la fraction que représente la substance légère de remplissage s'élevant de 1 à 20 % en poids, rapportés à la substance lourde de remplissage dont le poids spécifique est supérieur à 1 g/cm³.

2. Adhésif selon la revendication 1, **caractérisé par** une substance légère de remplissage possédant un poids spécifique inférieur à 100 kg/m³.

3. Adhésif selon la revendication 1 ou 2, **caractérisé par** la température de transition vitreuse du polymère qui s'élève de -25 °C à -60 °C.

4. Adhésif selon la revendication 1, 2 ou 3, **caractérisé par** des substances légères de remplissage possédant un diamètre moyen de 5 à 20 µm et par des substances lourdes de remplissage possédant un diamètre moyen de 2 à 5 µm.

5. Adhésif selon au moins une des revendications 1 à 4, **caractérisé par** au moins un additif fonctionnel tel que des adjuvants de mise en dispersion, des émulsifiants, des adjuvants filmogènes, des conservants, des agents antimousse et des épaississants.

6. Adhésif selon au moins une des revendications 1 à 5, **caractérisé en ce qu'**il est essentiellement exempt de composés organiques volatils et de résines qui rendent collant.

7. Préparation de l'adhésif selon au moins une des revendications 1 à 6, **caractérisée en ce qu'**on introduit tout d'abord, tout en agitant, les adjuvants de mise en dispersion, les émulsifiants, les agents antimousse et le conservant, ainsi que d'autres adjuvants dans la dispersion polymère, avant d'introduire la substance légère de remplissage et la substance lourde de remplissage, et enfin l'épaississant.

8. Utilisation de l'adhésif selon au moins une des revendications précédentes, pour le collage de revêtements de sols, en particulier de revêtements textiles.
